# EUROPEAN PATENT SPECIFICATION

(11) **EP 1 756 990 B1**
(45) Date of publication and mention of the grant of the patent: **13.08.2014**
(21) Application number: 05741800.6
(22) Date of filing: 06.05.2005
(51) Int. Cl.: H04W 88/18, H04W 92/02, H04W 92/06, H04W 92/24, H04W 4/12

(54) **GATEWAY APPLICATION TO SUPPORT USE OF A SINGLE INTERNET ADDRESS DOMAIN FOR ROUTING MESSAGES TO MULTIPLE MULTIMEDIA MESSAGE SERVICE CENTERS**
GATEWAY-ANWENDUNG ZUR SUPPORT-VERWENDUNG EINER EINZIGEN INTERNET-ADRESSENDOMÄNE ZUM ROUTEN VON NACHRICHTEN ZU MEHREREN MULTIMEDIA-NACHRICHTENDIENSTZENTRALEN
APPLICATION PASSERELLE PERMETTANT D'UTILISER UN SEUL DOMAINE D'ADRESSES INTERNET AFIN D'ACHEMINER DES MESSAGES A PLUSIEURS CENTRES DE SERVICES DE MESSAGES MULTIMEDIAS

(30) Priority: 06.05.2004 US 568258 P; 07.10.2004 US 959187
(43) Date of publication of application: 28.02.2007
(73) Proprietor: TeleCommunication Systems, Inc., Annapolis, MD 21401 (US)
(72) Inventor: JOHNSON, Carl, S., Jr., Annapolis, MD 21401-4901 (US); DEWEY, Mike, Arnold, MD 21012 (US); BHADANGE, Nikhil, Alexandria, VA 22315 (US)
(74) Representative: Walker, Neville Daniel Alan
(86) International application number: PCT/US2005/015667
(87) International publication number: WO 2005/109707

(56) References cited:
- WO-A2-02/43414
- WO-A2-03/058991
- US-A1- 2005 141 522
- US-A1- 2005 186 974
- US-A1- 2006 053 197

## Description

### BACKGROUND OF THE INVENTION

### 1. Field of the Invention

This invention relates to wireless telecommunications, and in particular to multimedia messaging services (MMS).

### 2. Background of Related Art

The world has been transformed by the emergence of electronic messaging. Initially, short messaging services (SMS) were developed to allow text messaging. Later, these text capabilities were expanded to include audio and images with multimedia messaging services (MMS).

To send an MMS message, an MMS message file must first be created. The format of an MMS message file is documented in the MMS Encapsulation Protocol specification published by the Open Mobile Association (www.openmobileassociation.org) and/or the WAP Forum (www.wapforum.org). The MMS message file format consists of an MMS message binary header, followed by a multipart MIME message where the multipart message is encoded in a binary multipart format as defined by the WAP Wireless Session Protocol (WSP) specification. This binary MMS message file is stored on a web server using a MIME type of application/vnd.wap.mms-message and an MMS message type of m-retrieve-conf. A subset of the binary MMS header is sent as an MMS notification message (MMS message type m-notification-ind) via SMS to the mobile device together with a URL pointer to the location of the complete message.

MMS (Multimedia Messaging Service) messages are sent using a combination of SMS and Wireless Application Protocol (WAP) technologies. Conventionally, when an MMS message is sent, a mobile device 800 receives an MMS notification message via SMS. When this MMS notification message is received by the mobile device 800, the mobile device 800 either automatically or at user request initiates a WAP gateway connection to download the content of the MMS message.

Messages are delivered from an MMSC to a handset via an MM1 interface, which is normally implemented over a WAP gateway, but may also be delivered via some other proprietary direct IP air interface. MM4 is strictly defined as MMSC to MMSC communication. MM7 is the Value Added Service Provider interface to the MMSC. It is defined as an XMUSOAP API. MM4 and MM7 are not used to communicate to handset devices. MM4 is the MMS standard for connectivity between multiple MMSCs. MM4 is an SMTP based interface where the MMS message is posted to the server as a standard MIME encoded e-mail message. MM1 is the MMS standard for phones to send and receive MMS messages from an MMSC. For information relating to components of the MMS standard, reference should be made to 3Gpp TS 23.140 v6.5.0 Technical Specification - 3^{rd} Generation Partnership Project; Technical Specification Group Terminals; Multimedia Messaging Service (MMS); Functional description; Stage 2 (Release 6).

Moreover, wireless Service Providers (carriers) currently install a single Multimedia Messaging Service Center (MMSC) to support all of their multimedia messaging subscribers. The number of subscribers that the single MMSC can support is limited. In order to support more than one MMSC in the carrier's network, each MMSC must have a unique Internet address. Internet messages must be sent to the explicit mailbox and Internet domain name for a particular MMSC. Thus, multiple MMSCs serving the same network must each be referenced by unique address@domains. This forces the carrier to either rely on a single MMSC, or to publish a different domain for each MMSC deployed. This results in uncertainty for message senders as to which domain messages to any particular subscriber within the network should be addressed.

Carriers providing Multimedia Messaging Services utilize a single MMSC to serve all subscribers in their network OR they require messages to be addressed to the specific domain name of the MMSC hosting the subscriber, resulting in the use of multiple domain names for Multimedia Messaging within a single carrier network.

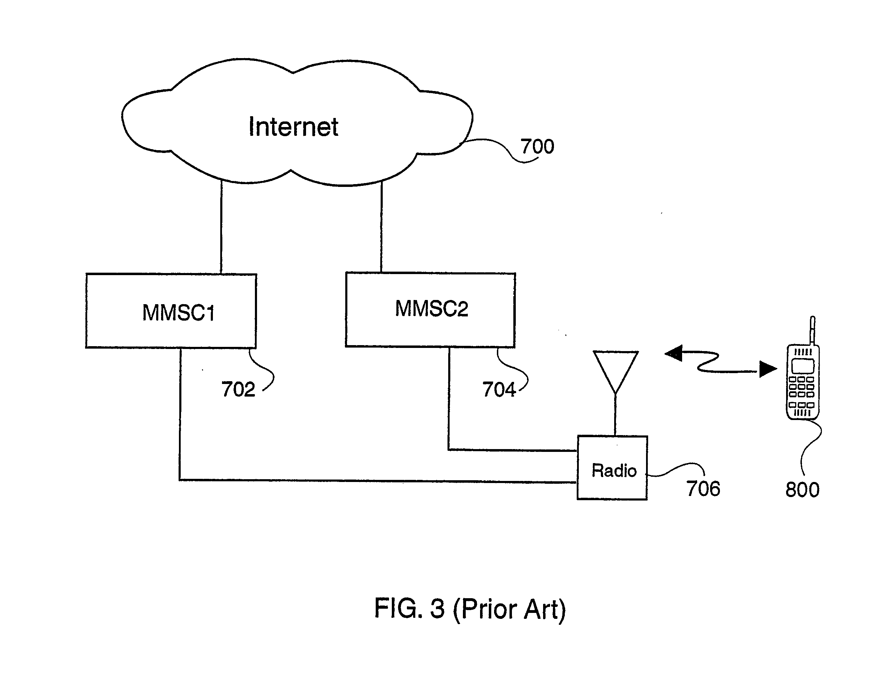

Fig. 3 depicts the conventional installation of an MMSC and an SMSC in a wireless provider's network.

There are disadvantages with the current technology. For instance, wireless service providers cannot publish a single domain name that can be used to address all of the carriers subscribers. Moreover, wireless service providers are forced to either rely on a single MMSC, or to publish a different domain for each MMSC deployed. Nationwide wireless service providers cannot employ multiple MMSCs to service geographically diverse population centers or to provide geographic redundancy for fault tolerance. Wireless service providers cannot easily integrate Multimedia Message Centers from multiple vendors. Any processing that the carrier wants to apply to Multimedia Messages must be applied at each MMSC. Also, there is no single point of connection for third party service providers to connect to send messages to all subscribers within the carrier's network.

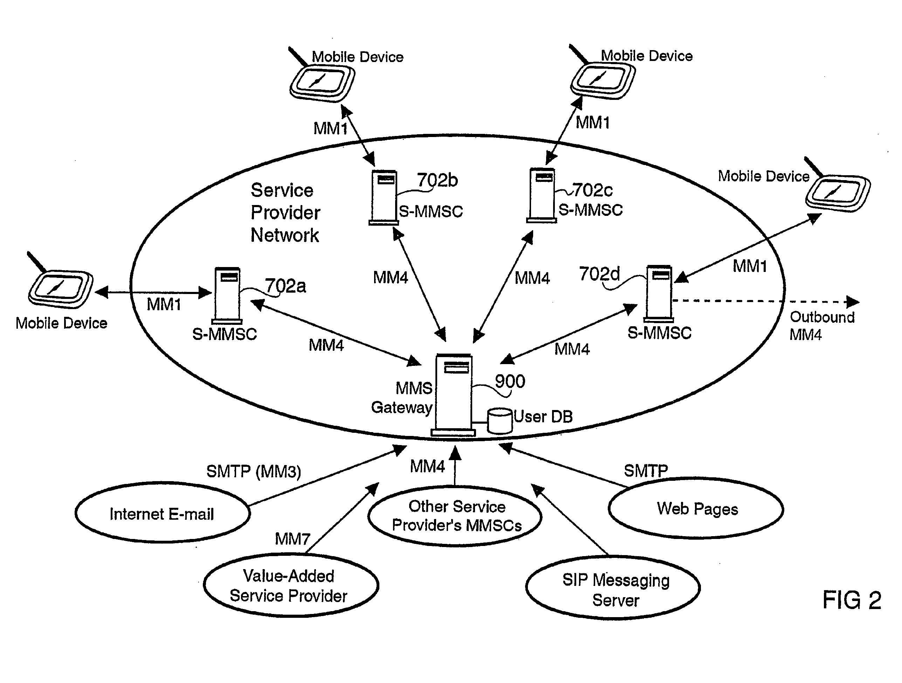

International patent publication WO 03/058991 discloses such a conventional multimedia message delivery arrangement in which an MMS relay (Fig. 2, 208) forwards Multimedia messages from a variety of different sources.

There is a need for techniques and architecture for MMS services which are simpler to implement from a sender's perspective, and which ensure maximum profitability from a carrier's perspective.

### SUMMARY OF THE INVENTION

In accordance with the principles of the present invention, a Multimedia Messaging (MMS) gateway comprises MM3 (SMTP), MM4 (MMS Extended SMTP) and MM7 (SOAP) interfaces for connection to an Internet. A plurality of MM3, MM4 and MM7 interfaces connect to a plurality of network Multimedia Messaging Service Centers (MMSCs). A database associates subscribers with a particular MMSC servicing them. A routing module forwards incoming MMS messages to a particular one of a plurality of MMSCs based on information obtained from the database. In this way, messages are sent to subscribers of a plurality of MMSCs using addresses to a single domain name associated with the MMS gateway.

A method of providing a single domain name for Multimedia Messaging (MMS) messages addressed to multiple Multimedia Messaging Service Centers (MMSCs) in a wireless network in accordance with another aspect of the present invention comprises receiving an MMS message through a connection to an internet intended for a subscriber of one of a plurality of MMSCs. A destination subscriber is associated with a particular one of the plurality of MMSCs servicing them. The received MMS message is forwarded to the particular one of the plurality of MMSCs based on an association of the destination subscriber with the particular one of the plurality of MMSCs. In this way, MMS messages are sent to subscribers of a plurality of MMSCs using addresses to a single domain name.

### BRIEF DESCRIPTION OF THE DRAWINGS

Features and advantages of the present invention will become apparent to those skilled in the art from the following description with reference to the drawings, in which:
Fig. 1 shows an exemplary MMSG network architecture implementing multiple MMSCs accessed via a single domain name using a multiple MMS gateway, in accordance with another embodiment.
Fig. 2. shows a wireless carrier implementing four MMSCs accessed via a single domain name assigned to a multiple MMS Gateway, in accordance with the embodiment of Fig. 1.
Fig. 3 depicts the conventional installation of an MMSC and an SMSC in a wireless provider's network.

### DETAILED DESCRIPTION OF ILLUSTRATIVE EMBODIMENTS

Benefits of the present invention include the fact that the Multimedia Messaging intelligent gateway **100** provides a single point to apply carrier initiated control processing such as anti-"spam" (unsolicited email) checks and subscriber or carrier defined message manipulation or message blocking by sender address for all messages entering the network. Also, the Multimedia Messaging intelligent gateway **100** provides a store-and-forward capability that prevents message loss in the event that an MMSC is momentarily out of service. Moreover, the message storage facility of the Multimedia Messaging intelligent gateway **100** can be utilized as a central inbox to facilitate Web reporting or to consolidate and accumulate overall network messaging statistics. The present invention also allows for the integration of MMSCs from multiple vendors into a carrier's network.

Another benefit of the present invention is that it allows wireless carrier networks to provide Multimedia Messaging utilizing multiple Multimedia Messaging Service Centers, allowing messages for subscribers of each of the multiple MMSCs to be sent addressed to but a single Internet domain.

In the embodiment of the present invention, the disclosed wireless MMS Gateway (MMSG) Application provides a gateway with a single domain name which connects all MMSCs in a provider's network, provides a single point of entry for messages into the network of MMSCs and maintains routing information sufficient to route messages to all subscribers via the appropriate MMSC.

Exemplary components of the disclosed Multimedia Messaging Service Gateway are:
■ An MM3 (SMTP), MM4 (MMS Extended SMTP) and MM7 (SOAP) Servers for inbound email
■ A database containing subscriber tables, routing tables and message storage tables
■ A message routing engine
■ MM3 (SMTP), MM4 (MMS Extended SMTP) and MM7 (SOAP) client modules
■ An optional message input interface to provide a connection mechanism for third party applications.

The Multimedia Messaging Service Gateway (MMSG) is installed in the carrier's network as the primary mail server for wireless MMS messages. All MMS messages for all subscribers handled by all MMSCs in the network are addressed to the subscriber's phone number (the mailbox) at the domain name assigned to the MMSG. (e.g. 4105551212@mmsg.com) The MMSG stores the multimedia message in its Message table to provide store-and-forward support. The MMSG then queries its subscriber and routing tables to determine the proper destination MMSC for the destination subscriber. The MMSG routing engine determines the route based on its routing tables and directs the message to the appropriate output module for delivery to the appropriate Multimedia Messaging Service Center.

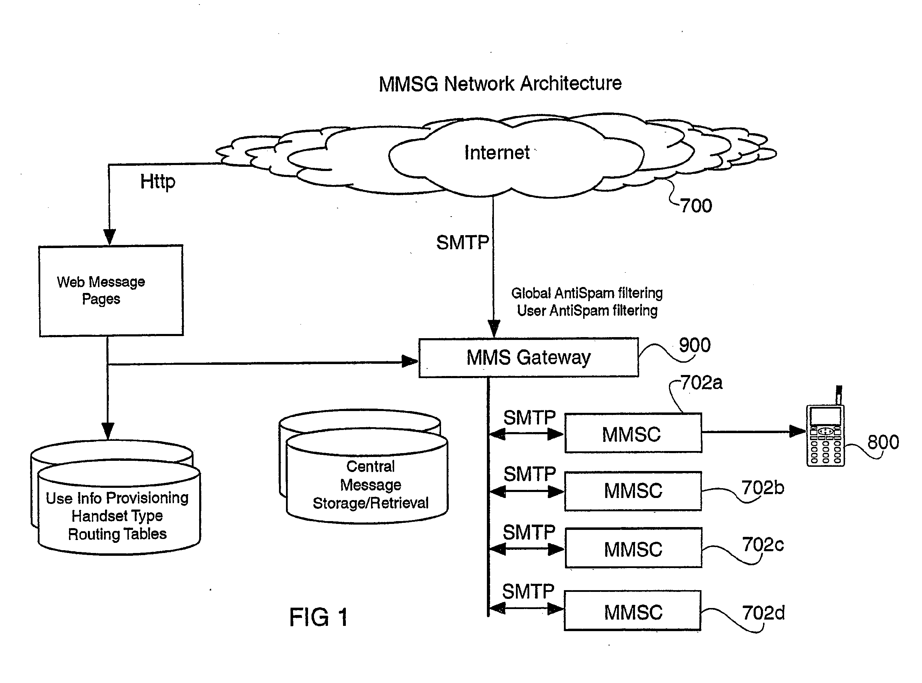

Fig. 1 shows an exemplary MMSG network architecture implementing multiple MMSCs accessed via a single domain name using a multiple MMS gateway, in accordance with another embodiment.

In particular, as shown in Fig. 1, an MMS gateway **900** accepts MMS messages intended for subscribers for any of the carrier's MMSCs **702a-702d**. The MMS gateway **900** allows a single addressable point of presence on the Internet (single URL) for subscribers of multiple MMSCs **702a-702d**.

Fig. 2 shows a wireless carrier implementing four MMSCs accessed via a single domain name assigned to a multiple MMS Gateway, in accordance with the embodiment of Fig. 1.

In particular, as shown in Fig. 2, multiple MMSCs **702a-702d** are accessed via a single MMS Gateway **900**, as also shown in Fig. 1.

The disclosed Multimedia Messaging Gateway **900** provides a single input connection point for Web based "Send an MMS message" pages.

The Multimedia Messaging Gateway **900** also provides a single input connection point for value added third party service providers.

The Multimedia Messaging Gateway **900** also provides a single point to apply carrier-initiated control processing such as anti-"spam" (unsolicited email) checks and subscriber or carrier defined message manipulation or message blocking by sender address for all messages entering the network.

The Multimedia Messaging Gateway **900** also provides a store-and-forward capability that prevents message loss in the event that an MMSC is momentarily out of service.

The message storage facility of the Multimedia Messaging Gateway 900 can be utilized as a central inbox to facilitate Web reporting or to consolidate and accumulate overall network messaging statistics.

The MMS gateway **900** has the inherent capability of integrating MMSCs **702a-702d** from multiple vendors. An MMS gateway 900 in accordance with the principles of the present invention also allows a carrier to customize message content and delivery rules on an individual MMSC basis.

The present invention has applicability with all national and international wireless cell phone service providers and/or carriers offering or planning to offer Multimedia Messaging Services. For instance, the invention has particular applicability in replacing stand alone Multimedia Messaging Service Centers.

The envisioned market for the present invention includes all national and international wireless cell phone service providers and/or carriers offering or planning to offer Multimedia Messaging Services (MMS) in conjunction with Short Message Service (SMS).

While the invention has been described with reference to the exemplary embodiments thereof, those skilled in the art will be able to make various modifications to the described embodiments of the invention without departing from the scope of the invention.

## Claims

1. A Multimedia Messaging Service (MMS) gateway (900), comprising: an Internet interface; at least one Multimedia Messaging Service Center (MMSC) interface to interface said MMS gateway with a plurality of MMSCs (702a, 702b, 702c, 702d); an MMSC subscriber database means for associating a destination subscriber device (800) with a particular servicing MMSC (702a) out of said plurality of MMSCs (702a, 702b, 702c, 702d) and for providing routing information for routing an incoming MMS message to a proper one of said plurality of MMSCs associated with said destination subscriber device; and means for forwarding said incoming MMS message to said proper one of said plurality of MMSCs (702a, 702b, 702c, 702d); wherein a single domain name associated with said MMS gateway provides a single input connection point for forwarding said incoming MMS message to said proper one of said plurality of MMSCs.

2. The Multimedia Messaging Service (MMS) gateway according to claim 1, further comprising: a table in said database defining a particular MMSC to which MMS messages to said particular subscriber device (800) are to be forwarded from said MMS gateway.

3. The Multimedia Messaging Service (MMS) gateway according to claim 1, further comprising: a single anti-spam filtering function operating on messages intended for each of said plurality of MMSCs (702a, 702b, 702c, 702d).

4. The Multimedia Messaging Service (MMS) gateway according to claim 1, further comprising: a store and forward capability that prevents message loss in an event that any of said plurality of MMSCs (702a, 702b, 702c, 702d) are momentarily out of service.

5. The Multimedia Messaging Service (MMS) gateway according to claim 1, further comprising: a module to facilitate, consolidate, and accumulate overall network messaging statistics for all of said plurality of MMSCs (702a, 702b, 702c, 702d).

6. A method of forwarding Multimedia Messaging Service (MMS) messages to a destination subscriber device (800), comprising: interfacing, with at least one Multimedia Messaging Service Center (MMSC) interface an MMS gateway (900) to a plurality of Multimedia Messaging Service Centers (MMSCs) (702a, 702b, 702c, 702d); receiving, at the Multimedia Messaging Service (MMS) gateway (900), an incoming MMS message addressed to said destination subscriber device (800); associating, in an MMSC subscriber database, said destination subscriber device (800) with a particular servicing MMSC out of said plurality of MMSCs, said MMSC subscriber database providing routing information for routing said incoming MMS message to a proper one of said plurality of MMSCs associated with said destination subscriber device (800); and forwarding said incoming MMS message to said proper one of said plurality of MMSCs (702a, 702b, 702c, 702d); wherein a single domain name associated with said MMS gateway (900) provides a single input connection point for forwarding said incoming MMS message to said proper one of said plurality of MMSCs.

7. The method of forwarding Multimedia Messaging Service (MMS) messages according to claim 6, wherein: said domain name is assigned a Universal Resource Locator (URL).

8. The method of forwarding Multimedia Messaging Service (MMS) messages according to claim 6, wherein: a single anti-spam filtering function operates on messages destined for the plurality of MMSCs.

9. The method of forwarding Multimedia Messaging Service (MMS) messages according to claim 6, further comprising: storing messages to prevent message loss in the event that any one of said plurality of MMSCs is momentarily out of service.

10. The Multimedia Messaging Service (MMS) gateway according to claim 1, wherein said Internet interface comprises: an MM3 (SMTP) interface; an MM4 (MMS Extended SMTP) interface; and an MM7 (SOAP) interface.

11. The Multimedia Messaging Service (MMS) gateway according to claim 1, wherein said at least one MMSC interface for connection to said plurality of MMSCs comprise at least one of: an MM3 (SMTP) interface; an MM4 (MMS Extended SMTP) interface; and an MM7 (SOAP) interface.

## Patentansprüche

1. Multimedia-Messaging-Service-Gateway (MMS-Gateway) (900), das Folgendes umfasst: eine Internetschnittstelle; mindestens eine Multimedia-Messaging-Service-Center-Schnittstelle (MMSC-Schnittstelle), um das MMS-Gateway mit mehreren MMSC (702a, 702b, 702c, 702d) zu verbinden; ein MMSC-Teilnehmerdatenbank-Mittel zum Assoziieren eines Zielteilnehmergeräts (800) mit einem bestimmten abwickelnden MMSC (702a) von den mehreren MMSC (702a, 702b, 702c, 702d) und zum Bereitstellen von Routing-Informationen zum Routen einer eingehenden MMS-Nachricht zu einem korrekten der mehreren MMSC, die mit dem Zielteilnehmergerät assoziiert sind; und Mittel zum Weiterleiten der eingehenden MMS-Nachricht an das korrekte der mehreren MMSC (702a, 702b, 702c, 702d); wobei ein einziger Domänenname, der mit dem MMS-Gateway assoziiert ist, einen einzigen Eingangsanschlusspunkt zum Weiterleiten der eingehenden MMS-Nachricht an das korrekte der mehreren MMSC bereitstellt.

2. Multimedia-Messaging-Service-Gateway (MMS-Gateway) nach Anspruch 1, das weiterhin Folgendes umfasst: eine Tabelle in der Datenbank, die ein bestimmtes MMSC definiert, an das MMS-Nachrichten an das bestimmte Teilnehmergerät (800) von dem MMS-Gateway weitergeleitet werden sollen.

3. Multimedia-Messaging-Service-Gateway (MMS-Gateway) nach Anspruch 1, das weiterhin Folgendes umfasst: eine einzige Spam-Filterfunktion, die an Nachrichten arbeitet, die für jedes der mehreren MMSC (702a, 702b, 702c, 702d) bestimmt sind.

4. Multimedia-Messaging-Service-Gateway (MMS-Gateway) nach Anspruch 1, das weiterhin Folgendes umfasst: eine Speicherungs- und Weiterleitungsfähigkeit, die einen Nachrichtenverlust in einem Fall verhindert, dass beliebige der mehreren MMSC (702a, 702b, 702c, 702d) vorübergehend außer Betrieb sind.

5. Multimedia-Messaging-Service-Gateway (MMS-Gateway) nach Anspruch 1, das weiterhin Folgendes umfasst: ein Modul zum Erleichtern, Konsolidieren und Kumulieren von Gesamt-Netz-Messaging-Statistiken für alle der mehreren MMSC (702a, 702b, 702c, 702d).

6. Verfahren zum Weiterleiten von Multimedia-Messaging-Service-Nachrichten (MMS-Nachrichten) an ein Zielteilnehmergerät (800), wobei das Verfahren Folgendes umfasst: Verbinden eines MMS-Gateways (900) mit mehreren Multimedia-Messaging-Service-Centern (MMSC) (702a, 702b, 702c, 702d) mittels mindestens einer Multimedia-Messaging-Service-Center-Schnittstelle (MMSC-Schnittstelle); Empfangen einer eingehenden MMS-Nachricht an dem Multimedia-Messaging-Service-Gateway (MMS-Gateway) (900), die an das Zielteilnehmergerät (800) adressiert ist; Assoziieren des Zielteilnehmergeräts (800) mit einem bestimmten abwickelnden MMSC von den mehreren MMSC in einer MMSC-Teilnehmerdatenbank, wobei die MMSC-Teilnehmerdatenbank Routing-Informationen zum Routen der eingehenden MMS-Nachricht zu einem korrekten der mehreren MMSC, die mit dem Zielteilnehmergerät (800) assoziiert sind, bereitstellt; und Weiterleiten der eingehenden MMS-Nachricht an das korrekte der mehreren MMSC (702a, 702b, 702c, 702d); wobei ein einziger Domänenname, der mit dem MMS-Gateway (900) assoziiert ist, einen einzigen Eingangsanschlusspunkt zum Weiterleiten der eingehenden MMS-Nachricht an das korrekte der mehreren MMSC bereitstellt.

7. Verfahren zum Weiterleiten von Multimedia-Messaging-Service-Nachrichten (MMS-Nachrichten) nach Anspruch 6, wobei: der Domänenname einer Internetadresse (Universal Resource Locator, URL) zugeteilt ist.

8. Verfahren zum Weiterleiten von Multimedia-Messaging-Service-Nachrichten (MMS-Nachrichten) nach Anspruch 6, wobei: eine einzige Spam-Filterfunktion an Nachrichten arbeitet, die für die mehreren MMSC bestimmt sind.

9. Verfahren zum Weiterleiten von Multimedia-Messaging-Service-Nachrichten (MMS-Nachrichten) nach Anspruch 6, das weiterhin Folgendes umfasst: Speichern von Nachrichten, um einen Nachrichtenverlust in dem Fall zu verhindern, dass ein beliebiges der mehreren MMSC vorübergehend außer Betrieb ist.

10. Multimedia-Messaging-Service-Gateway (MMS-Gateway) nach Anspruch 1, wobei die Internetschnittstelle Folgendes umfasst: einen MM3-Schnittstelle (SMTP-Schnittstelle); eine MM4-Schnittstelle (MMS-Extended-SMTP-Schnittstelle) und eine MM7-Schnittstelle (SOAP-Schnittstelle).

11. Multimedia-Messaging-Service-Gateway (MMS-Gateway) nach Anspruch 1, wobei die mindestens eine MMSC-Schnittstelle zur Verbindung mit den mehreren MMSC Folgendes umfasst: einen MM3-Schnittstelle (SMTP-Schnittstelle); eine MM4-Schnittstelle (MMS-Extended-SMTP-Schnittstelle) und/oder eine MM7-Schnittstelle (SOAP-Schnittstelle).

## Revendications

1. Passerelle de service de messagerie multimédia (MMS) (900), comportant: une interface Internet ; au moins une interface de centre de service de messagerie multimédia (MMSC) à des fins d'interface de ladite passerelle MMS avec une pluralité de MMSC (702a, 702b, 702c, 702d) ; un moyen de base de données d'abonnés MMSC à des fins d'association d'un dispositif d'abonné de destination (800) avec un MMSC de service particulier (702a) parmi ladite pluralité de MMSC (702a, 702b, 702c, 702d) et à des fins de fourniture d'informations de routage pour acheminer un message MMS entrant jusqu'à un centre approprié de ladite pluralité de MMSC associés audit dispositif d'abonné de destination ; et un moyen de réacheminement dudit message MMS entrant jusqu'audit centre approprié de ladite pluralité de MMSC (702a, 702b, 702c, 702d) ; dans laquelle un seul nom de domaine associé à ladite passerelle MMS fournit un seul point de connexion d'entrée à des fins de réacheminement dudit message MMS entrant jusqu'audit centre approprié de ladite pluralité de MMSC.

2. Passerelle de service de messagerie multimédia (MMS) selon la revendication 1, comportant par ailleurs : un tableau dans ladite base de données définissant un MMSC particulier jusqu'auquel les messages MMS audit dispositif d'abonné particulier (800) doivent être réacheminés en provenance de ladite passerelle MMS.

3. Passerelle de service de messagerie multimédia (MMS) selon la revendication 1, comportant par ailleurs : une seule fonction de filtrage anti pourriel opérant sur des messages destinés à chacune de ladite pluralité de MMSC (702a, 702b, 702c, 702d).

4. Passerelle de service de messagerie multimédia (MMS) selon la revendication 1, comportant par ailleurs : une capacité de stockage et de réacheminement qui empêche toute perte de message dans un cas de mise hors service provisoire de l'un quelconque de ladite pluralité de MMSC (702a, 702b, 702c, 702d).

5. Passerelle de service de messagerie multimédia (MMS) selon la revendication 1, comportant par ailleurs : un module permettant de faciliter, de consolider, et d'accumuler des statistiques générales de messagerie de réseau pour tous les centres de ladite pluralité de MMSC (702a, 702b, 702c, 702d).

6. Procédé de réacheminement de messages de service de messagerie multimédia (MMS) à un dispositif d'abonné de destination (800), comportant : l'étape consistant à interfacer, avec au moins une interface de centre de service de messagerie multimédia (MMSC), une passerelle MMS (900) avec une pluralité de centres de service de messagerie multimédia (MMSC) (702a, 702b, 702c, 702d) ; l'étape consistant à recevoir, au niveau de la passerelle de service de messagerie multimédia (MMS) (900), un message MMS entrant adressé audit dispositif d'abonné de destination (800) ; l'étape consistant à associer, dans une base de données d'abonnés MMSC, ledit dispositif d'abonné de destination (800) à un MMSC de service particulier parmi ladite pluralité de MMSC, ladite base de données d'abonnés MMSC fournissant des informations de routage pour acheminer ledit message MMS entrant à un centre approprié de ladite pluralité de MMSC associés audit dispositif d'abonné de destination (800) ; et l'étape consistant à réacheminer ledit message MMS entrant jusqu'audit centre approprié de ladite pluralité de MMSC (702a, 702b, 702c, 702d) ; dans lequel un seul nom de domaine associé à ladite passerelle MMS (900) fournit un seul point de connexion d'entrée à des fins de réacheminement dudit message MMS entrant jusqu'audit centre approprié de ladite pluralité de MMSC.

7. Procédé de réacheminement de messages de service de messagerie multimédia (MMS) selon la revendication 6, dans lequel : ledit nom de domaine se voit attribuer un localisateur uniforme de ressources (URL).

8. Procédé de réacheminement de messages de service de messagerie multimédia (MMS) selon la revendication 6, dans lequel : une seule fonction de filtrage anti pourriel opère sur des messages destinés à la pluralité de MMSC.

9. Procédé de réacheminement de messages de service de messagerie multimédia (MMS) selon la revendication 6, comportant par ailleurs : l'étape consistant à stocker des messages pour empêcher toute perte de message dans un cas de mise hors service provisoire de l'un quelconque de ladite pluralité de MMSC.

10. Passerelle de service de messagerie multimédia (MMS) selon la revendication 1, dans laquelle ladite interface Internet comporte : une interface MM3 (SMTP) ; une interface MM4 (MMS Extended SMTP) ; et une interface MM7 (SOAP).

11. Passerelle de service de messagerie multimédia (MMS) selon la revendication 1, dans laquelle ladite au moins une interface MMSC à des fins de connexion à ladite pluralité de MMSC comporte au moins l'une parmi : une interface MM3 (SMTP) ; une interface MM4 (MMS Extended SMTP) ; et une interface MM7 (SOAP).
